(19)

Europäisches Patentamt

European Patent Office

Office européen des brevets

(11) **EP 4 194 521 A1**

(12) **EUROPEAN PATENT APPLICATION**
published in accordance with Art. 153(4) EPC

(43) Date of publication:
**14.06.2023 Bulletin 2023/24**

(21) Application number: **21852269.6**

(22) Date of filing: **04.08.2021**

(51) International Patent Classification (IPC):
*C09D 133/14* ^(2006.01)   *B05D 1/36* ^(2006.01)
*C09D 167/00* ^(2006.01)

(52) Cooperative Patent Classification (CPC):
**B05D 1/36; C09D 133/14; C09D 167/00**

(86) International application number:
**PCT/JP2021/028925**

(87) International publication number:
**WO 2022/030536 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2020  JP 2020132067**

(71) Applicant: **Kansai Paint Co., Ltd
Amagasaki-shi, Hyogo 661-8555 (JP)**

(72) Inventor: **FURUYA Daisuke
Hiratsuka-shi, Kanagawa 254-8562 (JP)**

(74) Representative: **Zimmermann & Partner
Patentanwälte mbB
Postfach 330 920
80069 München (DE)**

(54) **COATING COMPOSITION WITH HIGH SOLIDS CONTENT, AND METHOD FOR FORMING MULTILAYER COATING FILM**

(57)   The present invention relates to a coating composition with a high solids content that includes: (A) a hydroxyl group- and alkoxysilyl group-including acrylic resin; (B) a hydroxyl group-including polyester resin; and (C) a polyisocyanate compound, wherein the acrylic resin (A) content is 20-50 parts by mass per 100 parts by mass of the resin solids content of the coating composition with a high solids content, the polyester resin (B) has an acid number of 10 mg KOH/g or less, a hydroxyl number of 180-300 mg KOH/g, and a number average molecular weight of 400-1500, and at the time of coating, the solids content of the coating composition with a high solids content is 50 mass% or greater.

EP 4 194 521 A1

**Description**

TECHNICAL FIELD

The present invention relates to a high-solid-content coating composition and a method for forming a multilayer coating film.

BACKGROUND ART

From the standpoint of protecting global environment, it is nowadays required to reduce the emission of volatile organic compounds (VOCs) from coating materials, and solvent coating materials are being rapidly replaced by water coating materials in each field.

In coating of motor vehicles also, solvent coating materials have been used in large quantities and it has been of urgent necessity to reduce the discharge of VOCs from these coating materials. Regarding various coating materials for use in the steps of undercoating, intercoating, and topcoating for motor vehicles, the replacement of organic-solvent coating materials by water coating materials has proceeded and coating with water coating materials is mainly conducted at present.

However, clear topcoating materials are required to attain especially high levels of coating firm performances (resistance to abrasion and scratch, hardness, etc.) and finish appearance and, hence, solvent clear coating materials are still mainly used for topcoating at present.

One means for VOC reduction in clear coating materials not by replacement by water coating materials is to use a coating material having a heightened solid content (to heighten the solid concentration).

For example, Patent Literature 1 discloses a high-solid-content coating composition in which a product of reaction between a specific carboxyl-group-containing compound and an epoxy-group-containing compound is used in combination with a polyisocyanate compound and a melamine resin and which further includes a specific hydroxyl-group-containing resin.

Patent Literature 2 discloses a topcoating composition including a vinyl copolymer containing a side chain having a specific group (lactone-modified hydroxyl group), a monomeric alkoxymelamine, a blocked isocyanate, and a rheology-control agent, as essential components.

CITATION LIST

PATENT LITERATURE

Patent Literature 1: JP-A-2002-201430
Patent Literature 2: JP-A-2002-020682

SUMMARY OF INVENTION

TECHNICAL PROBLEMS

However, the coating composition described in Patent Literature 1, although attaining high hardness, is insufficient in resistance to abrasion and scratch, and in finish.

Meanwhile, the topcoating composition described in Patent Literature 2, although attaining satisfactory resistance to abrasion and scratch, is insufficient in hardness and finish.

An object of the present invention is to provide a high-solid-content coating composition capable of forming coating films excellent in terms of hardness, resistance to abrasion and scratch, and finish appearance.

SOLUTION TO THE PROBLEMS

The present inventor diligently made investigations in order to accomplish the object and, as a result, has discovered that the object can be attained with the following coating composition, etc. The present invention has been thus completed.

<1> A high-solid-content coating composition including:

(A) an acrylic resin containing a hydroxyl group and an alkoxysilyl group;
(B) a polyester resin containing a hydroxyl group; and
(C) a polyisocyanate compound,

in which the acrylic resin (A) containing a hydroxyl group and an alkoxysilyl group is contained in an amount of 20-50 parts by mass per 100 parts by mass of resinous solid components of the high-solid-content coating composition,
the polyester resin (B) containing a hydroxyl group has an acid value of 10 mg-KOH/g or less, a hydroxyl value of 180 to 300 mg-KOH/g, and a number-average molecular weight of 400 to 1,500, and
the coating composition, when being applied, has a solid content of 50 mass% or more.

<2> The high-solid-content coating composition according to <1> in which the acrylic resin (A) containing a hydroxyl group and an alkoxysilyl group is contained in an amount of 31 to 45 parts by mass per 100 parts by mass of the resinous solid components of the high-solid-content coating composition.
<3> The high-solid-content coating composition according to <1> or <2> in which the acrylic resin (A) containing a hydroxyl group and an alkoxysilyl group has an alkoxysilyl group content of 50 to 200 mmol/g.
<4> The high-solid-content coating composition according to any one of <1> to <3> in which the polyester resin (B) containing a hydroxyl group is contained in an amount of 5-12 parts by mass per 100 parts by mass of the resinous solid components of the high-solid-content coating composition.
<5> The high-solid-content coating composition according to any one of <1> to <4> in which the polyester resin (B) containing a hydroxyl group is a polyester resin obtained using a dihydric alcohol and a tri- or more-hydric alcohol in combination as polyhydric alcohols.
<6> The high-solid-content coating composition according to <5> in which the dihydric alcohol and the tri- or more-hydric alcohol are included in a proportion of from 90/10 to 30/70 in terms of (dihydric alcohol)/(tri- or more-hydric alcohol) mass ratio.
<7> The high-solid-content coating composition according to any one of <1> to <6> which further including a melamine resin (D).
<8> A method for forming a multilayer coating film, the method including:

step (1): a step in which an intercoating composition is applied to an object to be coated, thereby forming an intercoat;
step (2): a step in which a base coating composition is applied to the intercoat formed in the step (1), thereby forming a base coat;
step (3): a step in which the high-solid-content coating composition according to any one of <1> to <7> is applied to the base coat formed in the step (2), thereby forming a clear coat; and
step (4): a step in which the intercoat, the base coat, and the clear coat, formed in the steps (1) to (3), are heated and cured at a time.

ADVANTAGEOUS EFFECT OF INVENTION

The high-solid-content coating composition of the present invention can form coating films excellent in terms of hardness, resistance to abrasion and scratch, and finish appearance.

DESCRIPTION OF EMBODIMENTS

The high-solid-content coating composition of the present invention (hereinafter sometimes abbreviated to "the coating") is described in more detail below.
The high-solid-content coating composition of the present invention is a high-solid-content coating composition including (A) an acrylic resin containing a hydroxyl group and an alkoxysilyl group, (B) a polyester resin containing a hydroxyl group, and (C) a polyisocyanate compound, in which the acrylic resin (A) containing a hydroxyl group and an alkoxysilyl group is contained in an amount of 20 to 50 parts by mass per 100 parts by mass of resinous solid components of the high-solid-content coating composition, the polyester resin (B) containing a hydroxyl group has an acid value of 10 mg-KOH/g or less, a hydroxyl value of 180 to 300 mg-KOH/g, and a number-average molecular weight of 400 to 1,500, and the coating composition, when being applied, has a solid content of 50 mass% or more.
In this description, the term "high-solid-content coating composition" means a coating composition which has a solid content of 50 mass% or more when being applied.
In this description, the term "solid content" means nonvolatile components that are contained in the coating composition and that remain after the coating composition is dried at 110°C for 1 hour, such as a resin, a hardener, and a pigment. The total solid content of a coating composition can hence be determined by weighing the coating composition placed in a heat-resistant vessel, e.g., an aluminum-foil cup, spreading the coating composition on the bottom of the vessel, thereafter drying the coating composition at 110°C for 1 hour, measuring the mass of the components of the coating composition which remain after the drying, and determining the proportion of the mass of the components remaining after the drying to the mass of the whole coating composition of before the drying.

In this description, values of weight-average molecular weight and number-average molecular weight are ones calculated from a chromatogram obtained by an examination with a gel permeation chromatograph, using the molecular weights of standard polystyrenes as a reference. Used as the gel permeation chromatograph was "HLC8120GPC" (manufactured by Tosoh Corp.). Using four columns, i.e., "TSKgel G-4000HXL", "TSKgel G-3000HXL", "TSKgel G-2500HXL", and "TSKgel G-2000HXL" (trade names; all manufactured by Tosoh Corp.), the examination was made under the conditions of a mobile phase of tetrahydrofuran, a measuring temperature of 40°C, a flow rate of 1 cc/min, and a detector of RI.

[Acrylic Resin (A) containing Hydroxyl Group and Alkoxysilyl Group]

The acrylic resin (A) containing a hydroxyl group and an alkoxysilyl group is an acrylic resin having one or more hydroxyl groups and one or more alkoxysilyl groups in one molecule.

The acrylic resin (A) containing a hydroxyl group and an alkoxysilyl group can be obtained, for example, by copolymerizing a hydroxyl-group-containing polymerizable unsaturated monomer, an alkoxysilyl-group-containing polymerizable unsaturated monomer, and other polymerizable unsaturated monomer (a polymerizable unsaturated monomer which is neither a hydroxyl-group-containing polymerizable unsaturated monomer nor an alkoxysilyl-group-containing polymerizable unsaturated monomer).

The hydroxyl-group-containing polymerizable unsaturated monomer is a compound having one or more hydroxyl groups and one or more polymerizable unsaturated bonds in one molecule. Examples of the hydroxyl-group-containing polymerizable unsaturated monomer include: monoesters of (meth)acrylic acid with a dihydric alcohol having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; $\varepsilon$-caprolactone modifications of the monoesters of (meth)acrylic acid with a dihydric alcohol having 2 to 8 carbon atoms; adducts of (meth)acrylic acid with an epoxy-group-containing compound (e.g., "Cardura E10P" (trade name; manufactured by Hexion Specialty Chemicals, Inc.; glycidyl ester of synthetic, highly branched, saturated fatty acid (glycidyl neodecanoate)); N-hydroxymethyl(meth)acrylamide; allyl alcohol; and (meth)acrylates having a polyoxyethylene chain terminated by a hydroxyl group.

One such hydroxyl-group-containing polymerizable unsaturated monomer can be used alone, or two or more such hydroxyl-group-containing polymerizable unsaturated monomers can be used in combination.

From the standpoint of the resistance to abrasion and scratch, weatherability, and hardness, etc. of coating films to be formed, the hydroxyl-group-containing polymerizable unsaturated monomer to be used is preferably a polymerizable unsaturated monomer containing a primary hydroxyl group.

Examples of the polymerizable unsaturated monomer containing a primary hydroxyl group include polymerizable unsaturated monomers having a primary hydroxyl group and having an ester moiety in which the number of carbon atoms of the alkyl group is 2 to 8, preferably 2 to 6, more preferably 2 to 4, such as 2-hydroxyethyl (meth)acrylate, 3-hydroxypropyl (meth)acrylate, and 4-hydroxybutyl (meth)acrylate. One of these can be used alone, or two or more thereof can be used in combination. Among these examples, 2-hydroxyethyl (meth)acrylate is suitable for use from the standpoint of the resistance to abrasion and scratch, water resistance, and hardness, etc. of coating films to be formed.

In producing the acrylic resin (A) containing a hydroxyl group and an alkoxysilyl group, the amount of the hydroxyl-group-containing polymerizable unsaturated monomer to be used is 5 to 60 mass%, preferably 15 to 50 mass%, more preferably 25 to 45 mass%, based on the sum of the comonomer ingredients from the standpoint of the resistance to abrasion and scratch, weatherability, hardness, and finish appearance, etc. of coating films to be formed.

In the case of using the polymerizable unsaturated monomer containing a primary hydroxyl group, in producing the acrylic resin (A) containing a hydroxyl group and an alkoxysilyl group, the proportion of the polymerizable unsaturated monomer containing a primary hydroxyl group to all the hydroxyl-group-containing polymerizable unsaturated monomer(s) is 50 to 100 mass%, preferably 55 to 100 mass%, more preferably 60 to 100 mass%, from the standpoint of the resistance to abrasion and scratch, weatherability, hardness, and finish appearance, etc. of coating films to be formed.

Examples of the alkoxy moiety of the alkoxysilyl group possessed by the acrylic resin (A) containing a hydroxyl group and an alkoxysilyl group include alkoxy moieties having about 1 to 6 carbon atoms, preferably about 1 to 3 carbon atoms, such as methoxy, ethoxy, and propoxy. From the standpoint of the hardness, and resistance to abrasion and scratch, etc. of coating films to be formed, methoxy and ethoxy are more preferred as the alkoxy moiety, and methoxy is especially preferred.

Examples of the alkoxysilyl group include a trialkoxysilyl group, a dialkoxysilyl group, and a monoalkoxysilyl group. The alkoxysilyl group is preferably a trialkoxysilyl group from the standpoint of the hardness, and resistance to abrasion and scratch, etc. of coating films to be formed.

In the case where the alkoxysilyl group is a dialkoxysilyl group or a monoalkoxysilyl group, examples of the group(s) bonded to the silicon atom, other than the alkoxy, include alkyl groups having about 1 to 6 carbon atoms, preferably about 1 to 3 carbon atoms (e.g., methyl, ethyl, and propyl).

The alkoxysilyl-group-containing polymerizable unsaturated monomer is a compound having one or more alkoxysilyl groups and one or more polymerizable unsaturated bonds in one molecule. Examples of the alkoxysilyl-group-containing polymerizable unsaturated monomer include vinyltrimethoxysilane, vinyltriethoxysilane, acryloxyethyltrimethoxysilane, methacryloxyethyltrimethoxysilane, acryloxypropyltrimethoxysilane, methacryloxypropyltrimethoxysilane, acryloxypropyltriethoxysilane, methacryloxypropyltriethoxysilane, and vinyltris($\beta$-methoxyethoxy)silane.

From the standpoint of the resistance to abrasion and scratch, etc. of coating films to be formed, preferred as the alkoxysilyl-group-containing polymerizable unsaturated monomer are vinyltrimethoxysilane, $\gamma$-acryloxypropyltrimethoxysilane, and $\gamma$-methacryloxypropyltrimethoxysilane. More preferred is $\gamma$-methacryloxypropyltrimethoxysilane.

As the alkoxysilyl-group-containing polymerizable unsaturated monomer, a commercial product can be used. Examples thereof include "KBM-1003", "KBE-1003", "KBM-502", KBM-503", "KBE-502", "KBE-503", "KBM-5103", "KBM-5803" (all manufactured by Shin-Etsu Chemical Co., Ltd.), "Y-9936", "A-174" (both manufactured by Momentive Performance Materials Japan LLC.), "OFS-6030", and "Z-6033" (both manufactured by Dow Corning Toray Co., Ltd.).

One of such alkoxysilyl-group-containing polymerizable unsaturated monomers can be used alone, or two or more thereof can be used in combination.

In producing the acrylic resin (A) containing a hydroxyl group and an alkoxysilyl group, the amount of the alkoxysilyl-group-containing polymerizable unsaturated monomer to be used is 3 to 50 mass%, preferably 10 to 45 mass%, more preferably 20 to 40 mass%, based on the sum of the comonomer ingredients from the standpoint of the hardness, finish appearance, and resistance to abrasion and scratch, etc. of coating films to be formed.

As the other polymerizable unsaturated monomer, use can be made, for example, of the monomers shown below under (1) to (6). One of the following polymerizable unsaturated monomers can be used alone, or two or more thereof can be used in combination.

(1) Acid-group-containing Polymerizable Unsaturated Monomers

The acid-group-containing polymerizable unsaturated monomers are compounds each having one or more acid groups and one or more polymerizable unsaturated bonds in one molecule. Examples of the monomers include: carboxyl-group-containing monomers such as (meth)acrylic acid, crotonic acid, itaconic acid, maleic acid, and maleic anhydride; sulfo-group-containing monomers such as vinylsulfonic acid and 2-sulfoethyl (meth)acrylate; and acidic phosphoric ester monomers such as 2-(meth)acryloyloxyethyl acid phosphate, 2-(meth)acryloyloxypropyl acid phosphate, 2-(meth)acryloyloxy-3-chloropropyl acid phosphate, and 2-methacryloyloxyethyl phenyl phosphate. One of these can be used alone, or two or more thereof can be used.

In the case of using an acid-group-containing polymerizable unsaturated monomer, this monomer is preferably used in such an amount that the acrylic resin (A) containing a hydroxyl group and an alkoxysilyl group has an acid value of 0.5 to 15 mg-KOH/g, especially 1 to 10 mg-KOH/g.

(2) Esters of Acrylic or Methacrylic Acid with Monohydric Alcohol having 1 to 20 Carbon Atoms

Specific examples include methyl (meth)acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, isooctyl (meth)acrylate, isomyristyl (meth)acrylate, stearyl (meth)acrylate, Isostearyl Acrylate (trade name; manufactured by Osaka Organic Chemical Industry Ltd.), lauryl (meth)acrylate, tridecyl (meth)acrylate, tetrahydrofurfuryl (meth)acrylate, cyclohexyl (meth)acrylate, and isobornyl (meth)acrylate.

(3) Aromatic Vinyl Monomers

Specific examples include styrene, $\alpha$-methylstyrene, and vinyltoluene.

Use of an aromatic vinyl monomer as a constituent component not only enables the obtained resin to have an elevated glass transition temperature but also makes it possible to obtain hydrophobic coating films having a high refractive index. It is hence possible to obtain the effect of improving the finish appearance by improving the gloss of the coating films.

In the case of using an aromatic vinyl monomer as a constituent component, the proportion thereof is preferably 3 to 50 mass%, especially 5 to 40 mass%, based on the total amount of the monomer ingredients.

(4) Glycidyl-group-containing Polymerizable Unsaturated Monomers

The glycidyl-group-containing polymerizable unsaturated monomers are compounds each having one or more glycidyl groups and one or more polymerizable unsaturated bonds in one molecule. Specific examples thereof include glycidyl acrylate and glycidyl methacrylate.

(5) Compounds Containing Nitrogen Atom and Polymerizable Unsaturated Bond

Examples include (meth)acrylamide, N,N-dimethyl(meth)acrylamide, N-[3-(dimethylamino)propyl](meth)acrylamide, N-butoxymethyl(meth)acrylamide, diacetone (meth)acrylamide, N,N-dimethylaminoethyl (meth)acrylate, vinylpyridine, vinylimidazole, acrylonitrile, and methacrylonitrile.

(6) Other Vinyl Compounds

Examples include vinyl acetate, vinyl propionate, vinyl chloride, and vinyl versatate. Examples of vinyl versatate include commercial products "Veova 9" and "Veova 10" (trade names; both manufactured by Mitsubishi Chemical Corp.).
The other polymerizable unsaturated monomer(s) to be used can be one of the monomers shown above under (1) to (6) or a combination of two or more thereof.
In the present invention, the term "polymerizable unsaturated monomer" means a monomer having one or more (e.g., one to four) polymerizable unsaturated groups. The term "polymerizable unsaturated group" means an unsaturated group which is radical-polymerizable. Examples of the polymerizable unsaturated group include a vinyl group, a (meth)acryloyl group, a (meth)acrylamide group, a vinyl ether group, an allyl group, a propenyl group, an isopropenyl group, and a maleimide group.
In this description, the term "(meth)acrylate" means acrylate or methacrylate. The term "(meth)acrylic acid" means acrylic acid or methacrylic acid. The term "(meth)acryloyl" means acryloyl or methacryloyl. The term "(meth)acrylamide" means acrylamide or methacrylamide.
Copolymerization methods for copolymerizing the hydroxyl-group-containing polymerizable unsaturated monomer, alkoxysilyl-group-containing polymerizable unsaturated monomer, and other polymerizable unsaturated monomer to obtain the acrylic resin (A) containing a hydroxyl group and an alkoxysilyl group should not be particularly limited, and use can be made of copolymerization methods which themselves are known. Among these, a solution polymerization method is suitable for use, in which the polymerization is conducted in an organic solvent in the presence of a polymerization initiator.
Examples of the organic solvent to be used in the solution polymerization method include: aromatic solvents such as toluene, xylene, and "Swazole 1000" (trade name; manufactured by Cosmo Oil Co., Ltd.; high-boiling-point petroleum solvent); ester solvents such as ethyl acetate, butyl acetate, propyl propionate, butyl propionate, 1-methoxy-2-propyl acetate, 2-ethoxyethyl propionate, 3-methoxybutyl acetate, ethylene glycol ethyl ether acetate, and propylene glycol methyl ether acetate; ketone solvents such as methyl ethyl ketone, methyl isobutyl ketone, and methyl amyl ketone; and alcohol solvents such as isopropanol, n-butanol, isobutanol, and 2-ethylhexanol.
One of these organic solvents can be used alone, or two or more thereof can be used in combination. From the standpoint of the solubility of the acrylic resin, it is preferred to use an ester solvent or a ketone solvent. Use of an aromatic solvent in combination therewith can also be suitable.
Examples of polymerization initiators usable in performing the copolymerization for producing the acrylic resin (A) containing a hydroxyl group and an alkoxysilyl group include known radical polymerization initiators such as 2,2'-azobisisobutyronitrile, benzoyl peroxide, di-t-butyl peroxide, di-t-amyl peroxide, t-butyl peroctoate, 2,2'-azobis(2-methylbutyronitrile), and 2,2'-azobis(2,4-dimethylvaleronitrile).
The acrylic resin (A) containing a hydroxyl group and an alkoxysilyl group preferably has a weight-average molecular weight of 2,000 to 50,000, especially 3,000 to 30,000, more preferably 4,000 to 20,000, from the standpoint of the finish appearance and curability, etc. of coating films.
The acrylic resin (A) containing a hydroxyl group and an alkoxysilyl group preferably has a glass transition temperature of -50 to 60°C, especially -15 to 45°C, more preferably 0 to 40°C, from the standpoint of the hardness and finish appearance, etc. of coating films to be formed.
In this description, the glass transition temperature (°C) of an acrylic resin was calculated using the following equations.

$$1/\mathrm{Tg}\,(\mathrm{K}) = (\mathrm{W1/T1}) + (\mathrm{W2/T2}) + \cdots \qquad (1)$$

$$Tg\ (°C) = Tg\ (K) - 273 \qquad\qquad (2)$$

In the equations, each W 1, W2, · · represents the proportion by mass of the monomer used in the copolymerization, and each T1, T2, · · represents the glass transition points Tg (K) of the homopolymer of the monomer.

Values of T1, T2, · · are those given in Polymer Hand Book (Second Edition, J. Brandup and E.H. Immergut, ed.) III, pp. 139 to 179. In the case of a monomer having an unknown homopolymer Tg, a static glass transition temperature is regarded as the glass transition temperature (°C). The static glass transition temperature was determined using, for example, differential scanning calorimeter "DSC-220U" (manufactured by Seiko Instruments Inc.) by putting a sample in a measuring cup, evacuating the cup to completely remove a solvent, and then examining the sample for calorific change at a heating rate of 3 °C/min in the range of -20°C to +200°C. A point on the base line where a first calorific change occurred on the lower-temperature side was taken as the static glass transition temperature.

The acrylic resin (A) containing a hydroxyl group and an alkoxysilyl group preferably has a hydroxyl value of 70 to 200 mg-KOH/g, especially 80 to 190 mg-KOH/g, more preferably 100 to 180 mg-KOH/g, from the standpoint of the resistance to abrasion and scratch, weatherability, curability, and finish appearance, etc. of coating films to be formed.

The acrylic resin (A) containing a hydroxyl group and an alkoxysilyl group has an alkoxysilyl group content of preferably 50 to 200 mmol/g, more preferably 70 to 190 mmol/g, still more preferably 90 to 180 mmol/g, from the standpoint of the resistance to abrasion and scratch, weatherability, hardness, and finish appearance, etc. of coating films to be formed.

One acrylic resin (A) containing a hydroxyl group and an alkoxysilyl group can be used alone, or two or more acrylic resins (A) containing a hydroxyl group and an alkoxysilyl group can be used in combination.

In the high-solid-content coating composition of the present invention, the acrylic resin (A) containing a hydroxyl group and an alkoxysilyl group is contained in an amount of 20 to 50 parts by mass per 100 parts by mass of the resinous solid components of the high-solid-content coating composition.

In the case where the content of the acrylic resin (A) containing a hydroxyl group and an alkoxysilyl group is 20 parts by mass or more per 100 parts by mass of the resinous solid components of the high-solid-content coating composition, coating films excellent in terms of resistance to abrasion and scratch, weatherability, and hardness can be formed. In the case where the amount thereof is 50 parts by mass or less, coating films having an excellent finish appearance can be formed. From the standpoint of the resistance to abrasion and scratch, weatherability, hardness, and finish appearance, etc. of coating films to be formed, the content of the acrylic resin (A) containing a hydroxyl group and an alkoxysilyl group is preferably 31 to 45 parts by mass, more preferably 35 to 45 parts by mass, per 100 parts by mass of the resinous solid components of the high-solid-content coating composition.

[Polyester Resin (B) containing Hydroxyl Group]

The polyester resin (B) containing a hydroxyl group has an acid value of 10 mg-KOH/g or less, a hydroxyl value of 180 to 300 mg-KOH/g, and a number-average molecular weight of 400 to 1,500.

In the case where the acid value of the polyester resin (B) containing a hydroxyl group is 10 mg-KOH/g or less, coating films having an excellent finish appearance are formed. From the standpoint of the finish appearance of coating films to be formed, the acid value of the polyester resin (B) containing a hydroxyl group is preferably 5 mg-KOH/g or less, more preferably 3 mg-KOH/g or less.

The polyester resin (B) containing a hydroxyl group has a hydroxyl value of 180 to 300 mg-KOH/g. In the case where the hydroxyl value of the polyester resin (B) containing a hydroxyl group is 180 mg-KOH/g or more, coating films excellent in terms of resistance to abrasion and scratch, water resistance, and hardness can be formed. In the case where the hydroxyl value thereof is 300 mg-KOH/g or less, coating films having an excellent finish appearance can be formed. From the standpoint of the resistance to abrasion and scratch, water resistance, hardness, and finish appearance, etc. of coating films to be formed, the hydroxyl value of the polyester resin (B) containing a hydroxyl group is preferably 190 to 280 mg-KOH/g, more preferably 200 to 250 mg-KOH/g.

The polyester resin (B) containing a hydroxyl group has a number-average molecular weight of 400 to 1,500. In the case where the number-average molecular weight of the polyester resin (B) containing a hydroxyl group is 400 or more, coating films having excellent weatherability and hardness can be formed. In the case where the number-average molecular weight thereof is 1,500 or less, coating films having an excellent finish appearance can be formed. From the standpoint of the weatherability, hardness, and finish appearance, etc. of coating films to be formed, the number-average molecular weight of the polyester resin (B) containing a hydroxyl group is preferably 500 to 1,200, more preferably 600 to 1,000.

The polyester resin (B) containing a hydroxyl group can generally be obtained by subjecting a polyhydric alcohol and a polybasic acid to esterification by a method which itself is known, under such conditions that the hydroxyl groups are in excess. The polyhydric alcohol is a compound having two or more hydroxyl groups in one molecule, and the polybasic acid is a compound having two or more carboxyl groups in one molecule.

Examples of the polyhydric alcohol include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and hydroxypivalic acid neopentyl glycol esters; polylactone diols formed by adding a lactone, e.g., ε-caprolactone to these dihydric alcohols; ester diols such as bis(hydroxyethyl) terephthalate; polyether diols such as bisphenol A alkylene oxide adducts, polyethylene glycol, polypropylene glycol, and polybutylene glycol; monoepoxy compounds such as α-olefin epoxides, e.g., propylene oxide and butylene oxide, and Cardura E10 [trade name; manufactured by Shell Kagaku K.K.; glycidyl ester of synthetic, highly branched, saturated fatty acid]; tri- or more-hydric alcohols such as glycerin, trimethylolpropane, trimethylolethane, diglycerin, triglycerin, 1,2,6-hexanetriol, pentaerythritol, dipentaerythritol, sorbitol, and mannitol; polylactone polyols formed by adding a lactone, e.g., ε-caprolactone to these tri- or more-hydric alcohols; alicyclic polyhydric alcohols such as 1,4-cyclohexanedimethanol, tricyclodecanedimethanol, hydrogenated bisphenol A, hydrogenated bisphenol F, hydrogenated bisphenol A, and hydrogenated bisphenol F; and cyclic polyol compounds having a nurate structure, such as tris(hydroxyalkyl) isocyanurates, ε-caprolactone modifications of the tris(hydroxyalkyl) isocyanurates, and tris(hydroxyethyl) isocyanurate.

One of these polyhydric alcohols can be used alone, or two or more thereof can be used in combination. However, from the standpoint of the resistance to abrasion and scratch, weatherability, and finish appearance, etc. of coating films to be formed, it is preferred to use a dihydric alcohol and a tri- or more-hydric alcohol in combination.

In the case where the dihydric alcohol and the tri- or more-hydric alcohol are used in combination as polyhydric alcohols for producing the polyester (B) containing a hydroxyl group, the proportions of these alcohols are preferably 90/10 to 30/70, more preferably 85/15 to 50/50, still more preferably 80/20 to 60/40, in terms of (dihydric alcohol)/(tri- or more-hydric alcohol) mass ratio, from the standpoint of the resistance to abrasion and scratch, weatherability, and finish appearance, etc. of coating films to be formed.

The dihydric alcohol to be used is preferably an aliphatic dihydric alcohol, more preferably 1,6-hexanediol, from the standpoint of the resistance to abrasion and scratch, and finish appearance, etc. of coating films to be formed.

Meanwhile, the tri- or more-hydric alcohol to be used is preferably a trihydric alcohol, more preferably trimethylolpropane, from the standpoint of the resistance to abrasion and scratch, water resistance, and finish appearance, etc. of coating films to be formed.

Examples of the polybasic acid include: aromatic polybasic acids, such as terephthalic acid, isophthalic acid, phthalic acid, naphthalenedicarboxylic acid, 4,4'-biphenyldicarboxylic acid, and diphenylmethane-4,4'-dicarboxylic acid, and the anhydrides thereof; alicyclic dicarboxylic acids, such as hexahydroisophthalic acid, hexahydroterephthalic acid, hexahydrophthalic acid, and tetrahydrophthalic acid, and the anhydrides thereof; aliphatic polybasic acids, such as adipic acid, sebacic acid, suberic acid, succinic acid, glutaric acid, maleic acid, chloromaleic acid, fumaric acid, dodecanedioic acid, pimelic acid, azelaic acid, itaconic acid, citraconic acid, and dimer acids, and the anhydrides thereof; lower-alkyl esters of these dicarboxylic acids, such as the methyl esters and the ethyl esters; and tri- or more-basic acids such as trimellitic acid, trimellitic acid anhydride, pyromellitic acid, pyromellitic acid anhydride, trimesic acid, methylcyclohexenetricarboxylic acid, and tetrachlorohexene polybasic acids and anhydrides thereof.

One of these polybasic acids can be used alone, or two or more thereof can be used in combination.

The polybasic acid to be used is preferably an alicyclic dicarboxylic acid and the anhydride thereof, more preferably hexahydrophthalic acid and the anhydride thereof, from the standpoint of the resistance to abrasion and scratch, hardness, and finish appearance, etc. of coating films to be formed.

In reacting the polyhydric alcohol with the polybasic acid, use may be further made of a monobasic acid, an oil ingredient (including fatty acid thereof), etc. according to need. Examples of the monobasic acid include benzoic acid and t-butylbenzoic acid, and examples of the oil ingredient include castor oil, dehydrated castor oil, safflower oil, soybean oil, linseed oil, tall oil, coconut oil, and fatty acids of these. One of these can be used, or two or more thereof can be used. The polyester resin may have been modified with an epoxy compound, such as butyl glycidyl ether, an alkylphenyl glycidyl ether, or glycidyl neodecanoate, according to need.

The content of the hydroxyl-group-containing polyester (B) in the high-solid-content coating composition of the present invention is preferably 5 to 12 parts by mass, more preferably 6 to 11 parts by mass, still more preferably 6 to 10 parts by mass, per 100 parts by mass of the resinous solid components of the high-solid-content coating composition, from the standpoint of the resistance to abrasion and scratch, weatherability, hardness, and finish appearance, etc. of coating films to be formed.

[Polyisocyanate Compound (C)]

The polyisocyanate compound (C) is a compound having at least two isocyanate groups in one molecule.

Examples thereof include aliphatic polyisocyanate compounds, alicyclic polyisocyanate compounds, araliphatic polyisocyanate compounds, aromatic polyisocyanate compounds, and derivatives of these polyisocyanate compounds.

Examples of the aliphatic polyisocyanate compounds include: aliphatic diisocyanate compounds such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanates, and methyl 2,6-diisocyanatohexanoate (common name: lysine diisocyanate); and aliphatic triisocyanate compounds such as 2-isocyanotoethyl 2,6-diisocyanotohexanoate, 1,6-diisocyanato-3-isocyanotomethylhexane, 1,4,8-triisocyanotooctane, 1,6,11-triisocyanatoundecane, 1,8-diisocyanoto-4-isocyanotomethyloctane, 1,3,6-triisocyanatohexane, and 2,5,7-trimethyl-1,8-diisocyanato-5-isocyanatomethyloctane.

Examples of the alicyclic polyisocyanate compounds include: alicyclic diisocyanate compounds such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures of these, methylenebis(4,1-cyclohexanediyl) diisocyanate (common name: hydrogenated MDI), and norbornane diisocyanate; and alicyclic triisocyanate compounds such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethy-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of the araliphatic polyisocyanate compounds include: araliphatic diisocyanate compounds such as methylenebis(4,1-phenylene) diisocyanate (common name: MDI), 1,3- or 1,4-xylylene diisocyanate or mixtures of these, co,co'-diisocyanato-1,4-diethylbenzene, and 1,3- or 1,4-bis(1-isocyanato-1-methylethyl)benzene (common name: tetramethylxylylene diisocyanate) or mixtures of these; and araliphatic triisocyanate compounds such as 1,3,5-triisocyanatomethylbenzene.

Examples of the aromatic polyisocyanate compounds include: aromatic diisocyanate compounds such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or mixtures of these, 4,4'-toluidine diisocyanate, and 4,4'-diphenyl ether diisocyanate; aromatic triisocyanate compounds such as triphenylmethane 4,4',4"-triisocyanate, 1,3,5-triisocyanatobenzene, and 2,4,6-triisocyanatotoluene; and aromatic tetraisocyanate compounds such as 4,4'-diphenylmethane 2,2',5,5'-tetraisocyanate.

Examples of the derivatives of the polyisocyanate compounds include the dimers and trimers of those polyisocyanate compounds, biuret, allophanates, urethodiones, urethoimines, isocyanurates, oxadiazinetriones, polymethylene-polyphenyl polyisocyanate (crude MDI, polymeric MDI), and crude TDI.

One of these polyisocyanate compounds and derivatives thereof may be used alone, or two or more thereof may be used in combination.

It is preferred to use, as the polyisocyanate compound (C), at least one compound selected from among aliphatic polyisocyanate compounds, alicyclic polyisocyanate compounds, and derivatives of these, from the standpoint of the weatherability, etc. of coating films to be formed. From the standpoints of making the coating composition to be obtained have an increased solid content and of the finish appearance, resistance to abrasion and scratch, etc. of coating films to be formed, it is more preferred to use an aliphatic polyisocyanate compound and/or a derivative thereof.

The aliphatic polyisocyanate compound and/or derivative thereof to be used is preferably an aliphatic diisocyanate compound and/or an isocyanurate form thereof, more preferably hexamethylene diisocyanate and/or an isocyanurate form thereof, from the standpoints of making the coating composition to be obtained have an increased solid content and of the finish appearance, resistance to abrasion and scratch, etc. of coating films to be formed.

The polyisocyanate compound (C) may be one in which the isocyanate groups thereof have been blocked with a blocking agent.

Examples of the blocking agent include: phenol compounds such as phenol, cresol, xylenol, nitrophenol, ethylphenol, hydroxydiphenyl, butylphenol, isopropylphenol, nonylphenol, octylphenol, and methyl hydroxybenzoate; lactam compounds such as $\varepsilon$-caprolactam, $\delta$-valerolactam, $\gamma$-butyrolactam, and $\beta$-propiolactam; aliphatic alcohol compounds such as methanol, ethanol, propyl alcohol, butyl alcohol, amyl alcohol, and lauryl alcohol; ether compounds such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol compounds such as benzyl alcohol, glycolic acid, methyl glycolate, ethyl glycolate, butyl glycolate, lactic acid, methyl lactate, ethyl lactate, butyl lactate, methylolurea, methylolmelamine, diacetone alcohol, 2-hydroxyethyl acrylate, and 2-hydroxyethyl methacrylate; oxime compounds such as formamidoxime, acetamidoxime, acetoxime, methyl ethyl ketoxime, diacetyl monoxime, benzophenone oxime, and cyclohexane oxime; active methylene compounds such as dimethyl malonate, diethyl malonate, ethyl acetoacetate, methyl acetoacetate, and acetylacetone; mercaptan compounds such as butyl mercaptan, t-butyl mercaptan, hexyl mercaptan, t-dodecyl mercaptan, 2-mercaptobenzothiazole, thiophenol, methylthiophenol, and ethylthiophenol; acid amide compounds such as acetanilide, acetanisidide, acetotoluide, acrylamide, methacrylamide, acetamide, stearamide, and benzamide; imide compounds such as succinimide, phthalimide, and maleimide; amine compounds such as diphenylamine, phenylnaphthylamine, xylidine, N-phenylxylidine, carbazole, aniline, naphthylamine, butylamine, dibutylamine, and butylphenylamine; imidazole compounds such as imidazole and 2-ethylimidazole; urea compounds such as urea, thiourea, ethyleneurea, ethylenethiourea, and diphenylurea; carbamic acid ester compounds such as phenyl N-phenylcarbamate; imine compounds such as ethyleneimine and propyleneimine; sulfurous acid salt compounds such as sodium bisulfite and potassium bisulfite; and azole compounds. Examples of the azole compounds include: pyrazole and pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole and imidazole derivatives such as imidazole, benzimidazole, 2-methylimidazole, 2-ethylimidazole, and 2-phenylimidazole; and imidazoline derivatives such as 2-methylimidazoline and 2-phenylimidazoline.

The content of the polyisocyanate compound (C) in the high-solid-content coating composition of the present invention is preferably 5-60 parts by mass, more preferably 15-50 parts by mass, still more preferably 25-45 parts by mass, per 100 parts by mass of the resinous solid components of the high-solid-content coating composition, from the standpoint of the resistance to abrasion and scratch, weatherability, hardness, and finish appearance, etc. of coating films to be formed.

[High-solid-content Coating Composition]

The high-solid-content coating composition of the present invention is a high-solid-content coating composition including (A) the acrylic resin containing a hydroxyl group and an alkoxysilyl group, (B) the polyester resin containing a hydroxyl group, and (C) the polyisocyanate compound, in which the acrylic resin (A) containing a hydroxyl group and an alkoxysilyl group is contained in an amount of 20 to 50 parts by mass per 100 parts by mass of the resinous solid components of the high-solid-content coating composition, the polyester resin (B) containing a hydroxyl group has an acid value of 10 mg-KOH/g or less, a hydroxyl value of 180 to 300 mg-KOH/g, and a number-average molecular weight of 400 to 1,500, and the coating composition, when being applied, has a solid content of 50 mass% or more.

From the standpoint of VOC reduction, the high-solid-content coating composition of the present invention, when being applied, preferably has a solid content of 53 mass% or more, more preferably 55 mass% or more.

The reason why the high-solid-content coating composition of the present invention can form coating films excellent in terms of hardness, resistance to abrasion and scratch, and finish appearance is not clear. However, it is presumed that since the content of the acrylic resin (A) containing a hydroxyl group and an alkoxysilyl group is 20 to 50 parts by mass, the self-condensation of the alkoxysilyl groups, which proceeds at a high reaction rate, results in a high crosslink density, and making it possible to form coating films excellent in terms of hardness and resistance to abrasion and scratch. Furthermore, since the polyester resin (B) containing a hydroxyl group has a hydroxyl value of 180 to 300 mg-KOH/g, this polyester resin (B) is presumed to have satisfactory reactivity with the polyisocyanate compound (C) to heighten the crosslink density, thereby making it possible to form coating films excellent in terms of hardness and resistance to abrasion and scratch. In addition, it is presumed that since the polyester resin (B) containing a hydroxyl group has an acid value of 10 mg-KOH/g or less and a number-average molecular weight of 400 to 1,500, this polyester resin (B) contributes to a reduction in coating-composition viscosity and hence enables the coating composition to have a higher solid content and to form coating films having an excellent finish appearance.

The high-solid-content coating composition of the present invention preferably further includes a melamine resin (D), from the standpoint of the resistance to abrasion and scratch, and hardness, etc. of coating films to be formed.

[Melamine Resin (D)]

As the melamine resin (D), use can be made of a partially or completely methylolated melamine resin obtained by reacting a melamine ingredient with an aldehyde ingredient. Examples of the aldehyde ingredient include formaldehyde, paraformaldehyde, acetaldehyde, and benzaldehyde.

Also usable is a resin obtained by partially or completely etherifying the methylol groups of the methylolated melamine resin with an appropriate alcohol. Examples of the alcohol to be used for the etherification include methyl alcohol, ethyl alcohol, n-propyl alcohol, isopropyl alcohol, n-butyl alcohol, isobutyl alcohol, 2-ethyl-1-butanol, and 2-ethyl-1-hexanol.

Preferred examples of the melamine resin (D) include: a methyl-etherified melamine resin obtained by partially or completely etherifying the methylol groups of a partially or completely methylolated melamine resin with methyl alcohol; a butyl-etherified melamine resin obtained by partially or completely etherifying the methylol groups of a partially or completely methylolated melamine resin with butyl alcohol; and a methyl- and butyl-etherified melamine resin obtained by partially or completely etherifying the methylol groups of a partially or completely methylolated melamine resin with methyl alcohol and butyl alcohol.

The melamine resin (D) desirably has a weight-average molecular weight of 400 to 6,000, preferably 500 to 5,000, more preferably 800 to 4,000.

As the melamine resin (D), commercial products can be used. Examples of the trade names of the commercial products include: "Cymel 202", "Cymel 203", "Cymel 238", "Cymel 251", "Cymel 303", "Cymel 323", "Cymel 324", "Cymel 325", "Cymel 327", "Cymel 350", "Cymel 385", "Cymel 1156", "Cymel 1158", "Cymel 1116", and "Cymel 1130" (all manufactured by Allnex Japan Inc.); and "U-VAN 120", "U-VAN 20HS", "U-VAN 20SE60", "U-VAN 2021", "U-VAN 2028", and "U-VAN 28-60" (all manufactured by Mitsui Chemicals, Inc.).

One of such melamine resins (D) can be used alone, or two or more thereof can be used in combination.

In the case where the high-solid-content coating composition of the present invention includes the melamine resin (D), the content thereof is preferably 1 to 30 parts by mass, more preferably 2 to 25 parts by mass, still more preferably 3 to 20 parts by mass, per 100 parts by mass of the resinous solid components of the high-solid-content coating composition, from the standpoint of the resistance to abrasion and scratch, and hardness, etc. of coating films to be formed.

[Other Components]

The high-solid-content coating composition of the present invention can further contain a resin other than those described above, a pigment, an organic solvent, a curing catalyst, a dispersant, a sedimentation inhibitor, a defoamer, a thickener, an ultraviolet absorber, a light stabilizer, a surface regulator, etc. according to need.

Examples of the resin other than those described above include an acrylic resin containing no hydroxyl group and/or containing no alkoxysilyl group, a polyester resin containing no hydroxyl group, a polyurethane resin which may contain a hydroxyl group, a polyether resin which may contain a hydroxyl group, a polycarbonate resin which may contain a hydroxyl group, and an epoxy resin which may contain a hydroxyl group. However, the high-solid-content coating composition preferably contains a hydroxyl-group-containing resin containing no alkoxysilyl group, from the standpoint of the hardness and finish appearance, etc. of coating films to be formed.

The hydroxyl-group-containing resin containing no alkoxysilyl group can be obtained by copolymerizing the hydroxyl-group-containing polymerizable unsaturated monomer explained above in the section Acrylic Resin (A) containing Hydroxyl Group and Alkoxysilyl Group with another polymerizable unsaturated monomer (a polymerizable unsaturated monomer which is neither a hydroxyl-group-containing polymerizable unsaturated monomer nor an alkoxysilyl-group-containing polymerizable unsaturated monomer).

In the case where the high-solid-content coating composition contains the hydroxyl-group-containing resin containing no alkoxysilyl group, the content thereof is preferably 1 to 20 parts by mass, more preferably 2 to 15 parts by mass, still more preferably 3 to 10 parts by mass, per 100 parts by mass of the resinous solid components of the high-solid-content coating composition, from the standpoint of the hardness and finish appearance, etc. of coating films to be formed.

Examples of the pigment include coloring pigments, glitter pigments, and extender pigments. One of such pigments can be used alone, or two or more thereof can be used in combination.

Examples of the coloring pigments include titanium oxide, zinc white, carbon black, cadmium red, molybdenum red, chrome yellow, chromium oxide, Prussian blue, cobalt blue, azo pigments, phthalocyanine pigments, quinacridone pigments, isoindoline pigments, threne pigments, and perylene pigments.

Examples of the glitter pigments include aluminum powders, mica powders, and mica powders coated with titanium oxide.

Examples of the extender pigments include talc, clay, kaolin, baryta, barium sulfate, barium carbonate, calcium carbonate, and alumina white.

Any one of those pigments can be used alone, or two or more thereof can be used in combination.

In the case where the high-solid-content coating composition of the present invention is to be used as a clear coating and where it contains a pigment, the content of the pigment is preferably such that the pigment does not adversely affect the transparency of coating films to be obtained. For example, the content thereof is usually preferably 0.1 to 20 mass%, especially 0.3 to 10 mass%, more preferably 0.5 to 5 mass%, based on the sum of all the solid components of the high-solid-content coating composition.

In the case where the high-solid-content coating composition of the present invention is to be used as a colored coating material and where it contains a pigment, the content of the pigment is usually preferably 1 to 200 mass%, especially 2 to 100 mass%, more preferably 5 to 50 mass%, based on the sum of all the solid components of the high-solid-content coating composition.

Examples of organic solvents which the high-solid-content coating composition of the present invention can contain include: aromatic solvents such as toluene, xylene, and "Swazole 1000" (trade name; manufactured by Cosmo Oil Co., Ltd.; high-boiling-point petroleum solvent); ester solvents such as ethyl acetate, butyl acetate, propyl propionate, butyl propionate, 1-methoxy-2-propyl acetate, 2-ethoxyethyl propionate, ethyl 3-ethoxypropionate, 3-methoxybutyl acetate, ethylene glycol monoethyl ether acetate, diethylene glycol monoethyl ether acetate, and propylene glycol monomethyl ether acetate; ketone solvents such as methyl ethyl ketone, methyl isobutyl ketone, and methyl amyl ketone; and alcohol solvents such as isopropanol, n-butanol, isobutanol, and 2-ethylhexanol. One of these organic solvents can be used alone, or two or more thereof can be used in combination.

Examples of curing catalysts which the high-solid-content coating composition of the present invention can contain include: organometallic compounds such as tin octylate, dibutyltin diacetate, dibutyltin (di(2-ethylhexanoate), dibutyltin dilaurate, dioctyltin diacetate, dioctyltin di(2-ethylhexanoate), dibutyltin oxide, dibutyltin sulfide, dioctyltin oxide, dibutyltin fatty acid salts, lead 2-ethylhexanoate, zinc octylate, zinc naphthenate, fatty acid zinc salts, bismuth octanoate, bismuth 2-ethylhexanoate, bismuth oleate, bismuth neodecanoate, bismuth Versatate, bismuth naphthenate, cobalt naphthenate, calcium octylate, copper naphthenate, and tetra(2-ethylhexyl) titanate; sulfonic acids such as p-toluenesulfonic acid, dodecylbenzenesulfonic acid, and dinonylnaphthalenesulfonic acid; alkyl phosphates such as monobutyl phosphate, dibutyl phosphate, mono(2-ethylhexyl) phosphate, and di(2-ethylhexyl) phosphate; and salts of these acids with amine compounds. One of these curing catalysts can be used alone, or two or more thereof can be used in combination.

In the case where the high-solid-content coating composition of the present invention contains any of those curing catalysts, the content of the curing catalyst is preferably 0.005 to 2 mass%, especially 0.01 to 1 mass%, based on the sum of all the solid components of the high-solid-content coating composition of the present invention.

As thickeners which the high-solid-content coating composition of the present invention can contain, conventionally known thickeners can be used. Examples thereof include clay minerals (e.g., metal silicates and montmorillonite), acrylics (e.g., ones containing, in the molecule, a structure including a polymer or oligomer of an acrylic or methacrylic acid ester), polyolefins (e.g., polyethylene and polypropylene), amides (e.g., higher fatty acid amides, polyamides, and oligomers), polycarboxylic acids (including derivatives having at least two carboxyl groups in the molecule), cellulose (including various derivatives including nitrocellulose, acetylcellulose, and cellulose ethers), urethanes (polymers, oligomers, or the like each containing a urethane structure in the molecule), ureas (polymers, oligomers, or the like each containing a urea structure in the molecule), and urethane-ureas (polymers, oligomers, or the like each containing a urethane structure and a urea structure in the molecule).

As ultraviolet absorbers which the high-solid-content coating composition of the present invention can contain, conventionally known ultraviolet absorbers can be used. Examples thereof include ultraviolet absorbers such as benzotriazole absorbers, triazine absorbers, salicylic acid derivative absorbers, and benzophenone absorbers. One of these can be used alone, or two or more thereof can be used in combination.

In the case where the high-solid-content coating composition of the present invention contains an ultraviolet absorber, the content of the ultraviolet absorber is usually preferably 0.1 to 10 mass%, especially 0.2 to 5 mass%, more preferably 0.3 to 2 mass%, based on the sum of all the solid components of the high-solid-content coating composition.

As light stabilizers which the high-solid-content coating composition of the present invention can contain, conventionally known light stabilizers can be used. Examples thereof include hindered-amine light stabilizers.

Hindered-amine light stabilizers suitable for use are lowly basic hindered-amine light stabilizers, from the standpoint of pot life. Examples of such hindered-amine light stabilizers include acylated hindered amines and amino-ether hindered amines. Specific examples thereof include "HOSTAVIN 3058" (trade name; manufactured by Clariant A.G.) and "TINUVIN 123" (trade name; manufactured by BASF A.G.).

Methods for applying the high-solid-content coating composition of the present invention should not particularly be limited. Examples thereof include coating methods such as air spray coating, air-less spray coating, rotary atomization coating, and curtain coating. A wet coating film can be formed by any of these methods. In these coating methods, an electrostatic potential may be applied according to need. Especially preferred of these coating methods is air spray coating or rotary atomization coating. The coating is preferably applied in such an amount as to result in a cured-film thickness of usually 10 to 60 $\mu$m, especially 25 to 50 $\mu$m.

In cases when air spray coating, air-less spray coating, or rotary atomization coating is to be conducted, it is preferred to suitably regulate the viscosity of the coating with a solvent, e.g., an organic solvent, and a thickener so that the viscosity comes to be in a range suitable for the coating, usually in the viscosity range of 15 to 60 seconds, especially 20 to 40 seconds, in terms of viscosity measured with Ford cup No. 4 viscometer at 20°C.

The wet coating film formed by applying the coating to an object to be coated can be cured by heating. The heating can be conducted by a known heating means. For example, a drying oven can be used, such as a hot-air oven, an electric oven, and an infrared induction heating oven. The heating temperature should not be particularly limited, and is, for example, 60 to 160°C, preferably 80 to 140°C. The heating time should not be particularly limited, and is, for example, 10 to 60 minutes, preferably 15 to 30 minutes.

Since the high-solid-content coating composition of the present invention can form coating films excellent in terms of hardness, resistance to abrasion and scratch, and finish appearance, the coating is suitable for use as a clear topcoating material. The coating is especially suitable for use as an automotive coating material.

[Method for forming Multilayer Coating Film]

The following method, for example, is suitable for use as a method for multilayer coating film formation in which the coating is used as a clear topcoaing material.

A method for forming a multilayer coating film, the method including:

step (1): a step in which an intercoating composition is applied to an object to be coated, thereby forming an intercoat;
step (2): a step in which a base coating composition is applied to the intercoat formed in the step (1), thereby forming a base coat;
step (3): a step in which the high-solid-content coating composition of the present invention is applied to the base coat formed in the step (2), thereby forming a clear coat; and
step (4): a step in which the intercoat, the base coat, and the clear coat, formed in the steps (1) to (3), are heated and cured at a time.

The object to be coated should not be particularly limited. Examples thereof include: outside plates of bodies of motor vehicles such as automobiles, trucks, auto bicycles, and buses; components of motor vehicles; and outside plates of domestic electrical products such as cell phones and audio devices. Preferred of these are outside plates of bodies of motor vehicles and components of motor vehicles.

The materials of these objects to be coated should not be particularly limited. Examples thereof include: metallic materials such as iron, aluminum, brass, copper, tinplate, stainless steel, galvanized steel, and steel plated with zinc alloys (e.g., Zn-Al, Zn-Ni, and Zn-Fe); plastic materials including resins such as polyethylene resins, polypropylene resins, acrylonitrile/butadiene/styrene (ABS) resins, polyamide resins, acrylic resins, vinylidene chloride resins, polycarbonate resins, polyurethane resins and epoxy resins, and various FRPs; inorganic materials such as glass, cement, and concrete; wood; and fibrous materials such as paper and fabric. Preferred of these are metallic materials and plastic materials.

The surface of the object where a multilayer coating film is to be formed may be the metallic surface of, for example, a metallic base, such as an outside plate of a body of a motor vehicle, a component of a motor vehicle, a domestic electrical product, and a steel plate as a component of any of these, which has undergone a surface treatment such as phosphate treatment, chromate treatment, or composite-oxide treatment.

A coating film may be further formed on the object to be coated which may or may not have undergone a surface treatment. For example, after a surface treatment is given, according to need, to the object to be coated, which is the base, an undercoat may be formed thereon. In the case where the object to be coated is, for example, a body of a motor vehicle, the undercoat can be formed using a known undercoating composition which is in common use in coating bodies of motor vehicles.

The undercoating composition is applied usually for the purpose of imparting corrosion resistance to the object to be coated.

As the undercoating composition for forming the undercoat, use can be made of, for example, an electrodeposition coating material, preferably a cationic electrodeposition coating material.

The undercoat is preferably a cured coating film, from the standpoint of the finish appearance of the multilayer coating film to be formed.

As the intercoating composition, use can be made of a heat-curable intercoating composition known to be used for coating bodies of motor vehicles, etc. Suitable for use as the intercoating composition is, for example, a heat-curable coating material including a base resin having a crosslinkable functional group, a crosslinking agent, a coloring pigment, and an extender pigment.

The intercoating composition is applied usually for the purpose of imparting smoothness, chipping resistance, and adhesion between coating films to the object to be coated.

Examples of the crosslinkable functional group possessed by the base resin include a carboxyl group, a hydroxyl group, and an epoxy group.

Examples of the kind of the base resin include acrylic resins, polyester resins, alkyd resins, and urethane resins.

Examples of the crosslinking agent include melamine resins, polyisocyanate compounds, and blocked polyisocyanate compounds.

The intercoating composition to be used may be either a water-based coating composition or an organic-solvent-based coating composition. From the standpoint of reducing environmental burden, etc., however, a water-based coating composition is preferred.

The intercoating composition is applied in such an amount as to result in a cured-film thickness of preferably 10 to 60 $\mu$m, more preferably 15 to 50 $\mu$m, still more preferably 20 to 40 $\mu$m.

As the base coating composition, use can be made of a heat-curable base coating composition known to be used for coating bodies of motor vehicles, etc. Suitable for use as the base coating composition is, for example, a heat-curable coating composition including a base resin having a crosslinkable functional group, a crosslinking agent, a coloring pigment, and an extender pigment.

The base coating composition is applied usually for the purpose of imparting excellent design attractiveness (e.g., color, metallic sense, and gloss) to the object to be coated.

Examples of the crosslinkable functional group possessed by the base resin include a carboxyl group, a hydroxyl group, and an epoxy group.

Examples of the kind of the base resin include acrylic resins, polyester resins, alkyd resins, and urethane resins.

Examples of the crosslinking agent include melamine resins, polyisocyanate compounds, and blocked polyisocyanate compounds.

The base coating composition to be used may be either a water-based coating composition or an organic-solvent-based coating composition. From the standpoint of reducing environmental burden, etc., however, a water-based coating composition is preferred.

The base coating composition is applied in such an amount as to result in a cured-film thickness of preferably 5 to 40 $\mu$m, more preferably 6 to 35 $\mu$m, still more preferably 7 to 30 $\mu$m.

The heating can be conducted by a known heating means. For example, a drying oven can be used, such as a hot-air oven, an electric oven, and an infrared induction heating oven. The heating temperature is preferably 60 to 180°C, more preferably 70 to 170°C, still more preferably 80 to 160°C. The heating time should not be particularly limited, and is preferably 10 to 40 minutes, more preferably 20 to 40 minutes.

EXAMPLES

The present invention is described in more detail below with reference to Production Examples, Examples, and Comparative Examples, but the present invention should not be limited by these. In the following, "parts" and "%" are by mass unless otherwise indicated. Each coating-film thickness is given in terms of cured-film thickness.

[Acrylic Resin (A) containing Hydroxyl Group and Alkoxysilyl Group]

(Production Example 1)

Into a reaction vessel equipped with a thermometer, a thermostat, a stirrer, a reflux condenser, a nitrogen introduction tube, and a dropping device were introduced 30 parts of "Swazole 1000" (trade name; manufactured by Cosmo Oil Co., Ltd,; aromatic organic solvent) and 10 parts of n-butanol. While nitrogen gas was kept being blown into the reaction vessel, the introduced liquids were stirred at 125°C, and a monomer mixture composed of 15 parts of $\gamma$-methacryloxypropyltrimethoxysilane, 32.5 parts of 2-hydroxyethyl methacrylate, 10 parts of styrene, 10 parts of 2-ethylhexyl acrylate, 32.5 parts of isobutyl methacrylate, and 7.0 parts of 2,2'-azobis(2-methylbutyronitrile) (polymerization initiator) was dropped thereinto at an even rate over 4 hours. Thereafter, the mixture was matured at 125°C for 30 minutes, and a solution composed of 0.5 parts of 2,2'-azobis(2-methylbutyronitrile) and 5.0 parts of "Swazole 1000" was then dropped thereinto at an even rate over 1 hour. Thereafter, the mixture was matured at 125°C for 1 hour, subsequently cooled, and then diluted by adding 6 parts of isobutyl acetate, thereby obtaining a solution of acrylic resin (A-1) containing a hydroxyl group and an alkoxysilyl group, the solution having a solid concentration of 65 mass%. The obtained acrylic resin (A-1) containing a hydroxyl group and an alkoxysilyl group had an alkoxysilyl group content of 60 mmol/g, a hydroxyl value of 140 mg-KOH/g, a weight-average molecular weight of 7,000, and a glass transition temperature of 32°C.

(Production Examples 2 and 3)

Solutions of acrylic resins (A-2) and (A-3) containing a hydroxyl group and an alkoxysilyl group which each had a solid concentration of 65% were obtained in the same manner as in Production Example 1, except that the composition in Production Example 1 was changed to those shown in Table 1. The alkoxysilyl group content, hydroxyl value, weight-average molecular weight, and glass transition temperature of each acrylic resin containing a hydroxyl group and an alkoxysilyl group are also shown in Table 1.

[Production of Acrylic Resin (E) containing Hydroxyl Group but containing no Alkoxysilyl Group]

(Production Example 4)

Into a reaction vessel equipped with a thermometer, a thermostat, a stirrer, a reflux condenser, a nitrogen introduction tube, and a dropping device were introduced 27 parts of "Swazole 1000" (trade name; manufactured by Cosmo Oil Co., Ltd,; aromatic organic solvent) and 5 parts of propylene glycol monomethyl ether acetate. While nitrogen gas was kept being blown into the reaction vessel, the introduced liquids were stirred at 150°C, and a monomer mixture composed of 20 parts of styrene, 32.5 parts of 2-hydroxypropyl acrylate, 46.8 parts of isobutyl methacrylate, 0.7 parts of acrylic acid, and 6.0 parts of di-tert-amyl peroxide (polymerization initiator) was dropped thereinto at an even rate over 4 hours. Thereafter, the mixture was matured at 150°C for 1 hour, subsequently cooled, and then diluted by adding 21 parts of isobutyl acetate, thereby obtaining a solution of acrylic resin (E-1) containing a hydroxyl group but containing no alkoxysilyl group, the solution having a solid concentration of 65 mass%. The obtained acrylic resin (E-1) containing a hydroxyl group but containing no alkoxysilyl group had a hydroxyl value of 140 mg-KOH/g, an acid value of 5.5 mg-KOH/g, a weight-average molecular weight of 5,500, and a glass transition temperature of 38°C.

Table 1

| Production Example | | | 1 | 2 | 3 | 4 |
|---|---|---|---|---|---|---|
| Acrylic resin (A) containing hydroxyl group and alkoxysilyl group | | | A-1 | A-2 | A-3 | - |
| Acrylic resin (E) containing hydroxyl group but containing no alkoxysilyl group | | | - | - | - | E-1 |
| Organic solvent | | "Swazole 1000" | 30 | 30 | 30 | 27 |
| | | n-butanol | 10 | 10 | 10 | - |
| | | propylene glycol monomethyl ether acetate | - | - | - | 5 |
| Monomer mixture | Polymerizable unsaturated monomer containing alkoxysilyl group | γ-methacryloxypropyltrimethoxysilane | 15 | 30 | 45 | - |
| | Polymerizable unsaturated monomer containing hydroxyl group | 2-hydroxyethyl methacrylate | 32.5 | 32.5 | 32.5 | - |
| | | 2-hydroxypropyl acrylate | - | - | - | 32.5 |
| | Other polymerizable unsaturated monomer | styrene | 10 | 10 | 10 | 20 |
| | | 2-ethylhexyl acrylate | 10 | 10 | 10 | - |
| | | isobutyl methacrylate | 32.5 | 17.5 | 2.5 | 46.8 |
| | | acrylic acid | - | - | - | 0.7 |
| | Polymerization initiator | 2,2'-azobis(2-methylbutyronitrile) | 7 | 7 | 7 | - |
| | | di-tert-amyl peroxide | - | - | - | 6 |
| Polymerization initiator | 2,2'-azobis(2-methylbutyronitrile) | | 0.5 | 0.5 | 0.5 | - |
| Organic solvent | "Swazole 1000" | | 5 | 5 | 5 | - |
| Organic solvent | isobutyl acetate | | 6 | 6 | 6 | 21 |
| Alkoxysilyl group content (mmol/g) | | | 60 | 121 | 181 | 0 |
| Hydroxyl value (mg-KOH/g) | | | 140 | 140 | 140 | 140 |
| Weight-average molecular weight | | | 7,000 | 7,000 | 7,000 | 5,500 |
| Glass transition temperature (°C) | | | 32 | 22 | 13 | 38 |

[Production of Polyester Resin (B) containing Hydroxyl Group]

(Production Example 5)

Into a reactor equipped with a stirrer, a reflux condenser, a water separator, and a thermometer were introduced 107.8 parts of hexahydrophthalic anhydride, 86.1 parts of 1,6-hexanediol, and 36.9 parts of trimethylolpropane. The mixture was reacted at 230°C for 6 hours and then diluted with butyl acetate, thereby obtaining a solution of polyester resin (B-1) containing a hydroxyl group, the solution having a solid concentration of 80%. The obtained polyester resin (B-1) containing a hydroxyl group had an acid value of 2 mg-KOH/g, a hydroxyl value of 226 mg-KOH/g, and a number-average molecular weight of 709.

(Production Examples 6 to 16)

Solutions of polyester resins (B-2) to (B-12) containing a hydroxyl group which each had a solid concentration of 80% were obtained in the same manner as in Production Example 5, except that the monomer composition, reaction time, and reaction temperature in Production Example 5 were changed or unchanged as shown in Table 2. The acid value, hydroxyl value, and number-average molecular weight of each polyester resin containing a hydroxyl group are also shown in Table 2.

Table 2

| Production Example | | | 5 | 6 | 7 | 8 | 9 | 10 | 11 | 12 | 13 | 14 | 15 | 16 |
|---|---|---|---|---|---|---|---|---|---|---|---|---|---|---|
| Polyester resin (B) containing hydroxyl group | | | B-1 | B-2 | B-3 | B-4 | B-5 | B-6 | B-7 | B-8 | B-9 | B-10 | B-11 | B-12 |
| Polybasic acid | Dibasic acid monomer | hexahydrophthalic anhydride | 107.8 | 107.8 | 107.8 | 126.3 | - | 117.0 | 107.8 | 100.1 | 115.5 | 107.8 | 95.5 | 132.4 |
| | | adipic acid | - | - | - | - | 105.1 | - | - | - | - | - | - | - |
| Polyhydric alcohol | Dihydric alcohol monomer | 1,6-hexanediol | 86.1 | 70.8 | 106.2 | 68.4 | 93.2 | - | 100.3 | 118.0 | 94.4 | 112.1 | 68.4 | 59.0 |
| | | ethylene glycol | - | - | - | - | - | 49.6 | - | - | - | - | - | - |
| | Tri- or more-hydric alcohol monomer | trimethylolpropane | 36.9 | 54.6 | 13.7 | 57.3 | 28.7 | 27.3 | - | - | 27.3 | 6.8 | 95.5 | 68.3 |
| | | pentaerythritol | - | - | - | - | - | - | 21.0 | - | - | - | - | - |
| Reaction temperature (°C) | | | 230 | 230 | 230 | 230 | 230 | 230 | 230 | 230 | 230 | 230 | 230 | 230 |
| Reaction time (h) | | | 6 | 6 | 6 | 6 | 6 | 6 | 6 | 6 | 6 | 6 | 6 | 6 |
| Acid value (mg-KOH/g) | | | 2 | 2 | 2 | 2 | 2 | 2 | 2 | 2 | 15 | 2 | 2 | 2 |
| Hydroxyl value (mg-KOH/g) | | | 226 | 256 | 185 | 186 | 217 | 214 | 235 | 192 | 190 | 172 | 317 | 181 |
| Number-average molecular weight | | | 709 | 717 | 700 | 1260 | 700 | 732 | 704 | 578 | 720 | 696 | 542 | 1642 |

[Production of High-solid-content Coating Compositions]

(Example 1)

A main agent obtained by evenly mixing 61.5 parts (solid content, 40 parts) of the solution of acrylic resin (A-1) containing a hydroxyl group and an alkoxysilyl group which had been obtained in Production Example 1, 7.7 parts (solid content, 5 parts) of acrylic resin (E-1) containing a hydroxyl group but containing no alkoxysilyl group which had been obtained in Production Example 4, 10 parts (solid content, 8 parts) of polyester resin (B-1) containing a hydroxyl group which had been obtained in Production Example 5, 16.7 parts (solid content, 10 parts) of "U-VAN 20SE60" (trade name; manufactured by Mitsui Chemicals, Inc.; melamine resin; solid content, 60%), 0.5 parts (solid content, 0.3 parts) of "SETALUX 61767 VX-60" (trade name; manufactured by Allnex Inc.; viscosity modifier; solid content, 60%), and 0.4 parts (solid content, 0.2 parts) of "BYK-300" (trade name; manufactured by BYK-Chemie GmbH; surface regulator; active ingredient, 52%) was evenly mixed with 37 parts of "Sumidule N3300" (trade name; manufactured by Sumika Covestro Urethane Co., Ltd.; isocyanurate form of hexamethylene diisocyanate; solid content, 100%) serving as a hardener just before application, and butyl acetate was further added thereto to regulate the solid content of the mixture during application to 58%. Thus, high-solid-content coating composition No. 1 was obtained.

Examples 2 to 14 and Comparative Examples 1 to 9

High-solid-content coating compositions No. 2 to No. 23 were obtained in the same manner as for high-solid-content coating composition No. 1, except that the composition and the solid content during application were changed or unchanged as shown in the following Tables 3 to 5. The compositions shown in Tables 3 to 5 each indicate the content of the components in terms of solid mass.

[Production of Test Plates]

(Production of Test Object to be coated)

"Elecron GT-10" (trade name; manufactured by Kansai Paint Co., Ltd.; cationic electrodeposition coating material) was applied by electrodeposition coating to a cold-rolled steel sheet which had undergone a chemical treatment with zinc phosphate, in such an amount as to result in a dry-film thickness of 20 $\mu$m and cured by heating at 170°C for 30 minutes. Thus, a test object to be coated was obtained.

(Production of Test Plates)

Using a rotary atomization type electrostatic coating machine, "WP-523H" (trade name; manufactured by Kansai Paint Co., Ltd.; water intercoating composition based on acrylic-melamine resin) was applied by electrostatic coating to the above-obtained test object to be coated, in such an amount as to result in a cured-film thickness of 20 $\mu$m. The applied coating composition was allowed to stand for 5 minutes to form an uncured intercoat.

Subsequently, using a rotation atomization type electrostatic coating machine, "WBC-720H" (trade name; manufactured by Kansai Paint Co., Ltd.; water base coating composition based on acrylic-melamine resin) was applied by electrostatic coating to the uncured intercoat in such an amount as to result in a dry-film thickness of 12 $\mu$m. The applied coating composition was allowed to stand for 3 minutes and then preheated at 80°C for 5 minutes to form an uncured base coat.

Subsequently, using a rotary atomization type electrostatic coating machine, high-solid-content coating composition No. 1 was applied by electrostatic coating to the uncured base coat in such an amount as to result in a dry-film thickness of 35 $\mu$m, thereby forming a clear coat. The clear coat was allowed to stand for 7 minutes. Subsequently, the coated object was heated at 140°C for 30 minutes to thermally cure the intercoat, base coat, and clear coat. Thus, a test plate of Example 1 was produced.

Test plates of Examples 2 to 14 and Comparative Examples 1 to 9 were produced in the same manner as for the test plate of high-solid-content coating composition No. 1, except that the high-solid-content coating composition No. 1 was replaced with each of high-solid-content coating compositions Nos. 2 to 23.

The test plates obtained above were each evaluated by the following test methods. The results of the evaluation are shown in Tables 3 to 5 together with the compositions of the coatings.

(Test Methods)

TUKON Hardness: The test plate was allowed to stand in a 20°C thermostatic chamber for 4 hours and then was examined for "TUKON hardness" with TUKON (micro hardness tester manufactured by American Chain & Cable Company Co., Ltd.). TUKON hardness, which is determined by a Knoop hardness test method, is a value measured with TUKON micro hardness tester, manufactured by American Chain & Cable Company Co., Ltd., and is also called Knoop hardness number (KHN). This hardness indicates the hardness of the coating film determined by forcing a square diamond pyramid indenter into a test surface of the material under a certain test load and measuring the size of the resultant rhombic recess. The more the value thereof, the higher the hardness. Evaluation results of 10 or more are regarded as acceptable.

Resistance to Abrasion and Scratch: The test plate was fixed to a testing table of a car washing tester (Carwash Lab Apparatus, manufactured by Amtec Co., Ltd.) in a 20°C atmosphere, and a car-washing brush kept rotating at 127 rpm was caused to travel forward and backward on the testing table ten times while a testing liquid obtained by mixing 1.5 g of "Sikron SH200" (trade name; fine silica particles having a particle diameter of 24 μm; manufactured by Quarzwerke GmbH) with 1 L of water was kept being sprayed onto or over the test plate. Thereafter, the test plate was washed with water and dried. The test plate was examined for 20° gloss with a glossmeter (manufactured by Byk-Gardner GmbH; device name, Micro Tri Gross) before and after the test, and a gloss retention was calculated using the following equation. The higher the gloss retention, the better the resistance to abrasion and scratch. Evaluation results of A, B, and C are regarded as acceptable.

$$\text{Gloss retention} = [(\text{gloss after the test})/(\text{gloss before the test})]\times100$$

A: gloss retention of 85% or more
B: gloss retention of 80% or more but less than 85%
C: gloss retention of 70% or more but less than 80%
D: gloss retention of 50% or more but less than 70%
E: gloss retention less than 50%

Finish Appearance: Each test plate was evaluated for finish appearance on the basis of long wave (LW) value measured with "Wave Scan" (trade name; manufactured by BYK-Gardner GmbH). The smaller the LW value, the higher the smoothness of the coating surface. Evaluation results of 10 or smaller are regarded as acceptable.

Table 3

|  |  | Example | | | | | | |
|---|---|---|---|---|---|---|---|---|
|  |  | 1 | 2 | 3 | 4 | 5 | 6 | 7 |
| High-solid-content coating composition No. |  | 1 | 2 | 3 | 4 | 5 | 6 | 7 |
| Acrylic resin (A) containing hydroxyl group and alkoxysilyl group | Acrylic resin (A-1) | 40 | - | - | - | - | - | - |
|  | Acrylic resin (A-2) | - | 40 | 25 | 45 | 45 | 48 | 40 |
|  | Acrylic resin (A-3) | - | - | - | - | - | - | - |
| Acrylic resin (E) containing hydroxyl group but containing no alkoxysilyl group | Acrylic resin (E-1) | 5 | 5 | 20 | - | 5 | - | 5 |

(continued)

| | | Example | | | | | | |
|---|---|---|---|---|---|---|---|---|
| | | 1 | 2 | 3 | 4 | 5 | 6 | 7 |
| Polyester resin (B) containing hydroxyl group | Polyester resin (B-1) | 8 | 8 | 8 | 8 | 8 | 12 | - |
| | Polyester resin (B-2) | - | - | - | - | - | - | 8 |
| | Polyester resin (B-3) | - | - | - | - | - | - | - |
| | Polyester resin (B-4) | - | - | - | - | - | - | - |
| | Polyester resin (B-5) | - | - | - | - | - | - | - |
| | Polyester resin (B-6) | - | - | - | - | - | - | - |
| | Polyester resin (B-7) | - | - | - | - | - | - | - |
| | Polyester resin (B-8) | - | - | - | - | - | - | - |
| | Polyester resin (B-9) | - | - | - | - | - | - | - |
| | Polyester resin (B-10) | - | - | - | - | - | - | - |
| | Polyester resin (B-11) | - | - | - | - | - | - | - |
| | Polyester resin (B-12) | - | - | - | - | - | - | - |
| Polyisocyanate compound (C) | "Sumidule N3300" | 37 | 37 | 37 | 37 | 42 | 40 | 37 |
| Melamine resin (D) | "U-VAN 20SE60" | 10 | 10 | 10 | 10 | - | - | 10 |
| Viscosity modifier | "SETALUX 61767 VX-60" | 0.3 | 0.3 | 0.3 | 0.3 | 0.3 | 0.3 | 0.3 |
| Surface regulator | "BYK-300" | 0.2 | 0.2 | 0.2 | 0.2 | 0.2 | 0.2 | 0.2 |
| Solid content during application (%) | | 58% | 58% | 58% | 58% | 58% | 58% | 58% |
| Evaluation results | TUKON hardness | 11 | 13 | 12 | 13 | 12 | 10 | 13 |
| | Resistance to abrasion and scratch | B | A | C | A | B | B | A |
| | Finish appearance | 7 | 6 | 5 | 8 | 6 | 5 | 9 |

Table 4

| | | Example | | | | | | |
|---|---|---|---|---|---|---|---|---|
| | | 8 | 9 | 10 | 11 | 12 | 13 | 14 |
| High-solid-content coating composition No. | | 8 | 9 | 10 | 11 | 12 | 13 | 14 |
| Acrylic resin (A) containing hydroxyl group and alkoxysilyl group | Acrylic resin (A-1) | - | - | - | - | - | - | - |
| | Acrylic resin (A-2) | 40 | 40 | 40 | 40 | 40 | 40 | - |
| | Acrylic resin (A-3) | - | - | - | - | - | - | 40 |
| Acrylic resin (E) containing hydroxyl group but containing no alkoxysilyl group | Acrylic resin (E-1) | 5 | 5 | 5 | 5 | 5 | 5 | 5 |

(continued)

| | | Example | | | | | | |
|---|---|---|---|---|---|---|---|---|
| | | 8 | 9 | 10 | 11 | 12 | 13 | 14 |
| Polyester resin (B) containing hydroxyl group | Polyester resin (B-1) | - | - | - | - | - | - | 8 |
| | Polyester resin (B-2) | - | - | - | - | - | - | - |
| | Polyester resin (B-3) | 8 | - | - | - | - | - | - |
| | Polyester resin (B-4) | - | 8 | - | - | - | - | - |
| | Polyester resin (B-5) | - | - | 8 | - | - | - | - |
| | Polyester resin (B-6) | - | - | - | 8 | - | - | - |
| | Polyester resin (B-7) | - | - | - | - | 8 | - | - |
| | Polyester resin (B-8) | - | - | - | - | - | 8 | - |
| | Polyester resin (B-9) | - | - | - | - | - | - | - |
| | Polyester resin (B-10) | - | - | - | - | - | - | - |
| | Polyester resin (B-11) | - | - | - | - | - | - | - |
| | Polyester resin (B-12) | - | - | - | - | - | - | - |
| Polyisocyanate compound (C) | "Sumidule N3300" | 37 | 37 | 37 | 37 | 37 | 37 | 37 |
| Melamine resin (D) | "U-VAN 20SE60" | 10 | 10 | 10 | 10 | 10 | 10 | 10 |
| Viscosity modifier | "SETALUX 61767 VX-60" | 0.3 | 0.3 | 0.3 | 0.3 | 0.3 | 0.3 | 0.3 |
| Surface regulator | "BYK-300" | 0.2 | 0.2 | 0.2 | 0.2 | 0.2 | 0.2 | 0.2 |
| Solid content during application (%) | | 58% | 58% | 58% | 58% | 58% | 58% | 58% |
| Evaluation results | TUKON hardness | 11 | 12 | 11 | 12 | 12 | 10 | 13 |
| | Resistance to abrasion and scratch | C | B | A | C | B | B | A |
| | Finish appearance | 6 | 9 | 7 | 8 | 6 | 5 | 10 |

Table 5

| | | Comparative Example | | | | | | | | |
|---|---|---|---|---|---|---|---|---|---|---|
| | | 1 | 2 | 3 | 4 | 5 | 6 | 7 | 8 | 9 |
| High-solid-content coating composition No. | | 15 | 16 | 17 | 18 | 19 | 20 | 21 | 22 | 23 |
| Acrylic resin (A) containing hydroxyl group and alkoxysilyl group | Acrylic resin (A-1) | - | - | - | - | - | - | - | - | - |
| | Acrylic resin (A-2) | 15 | 55 | 40 | 40 | 40 | 40 | 40 | 40 | 40 |
| | Acrylic resin (A-3) | - | - | - | - | - | - | - | - | - |
| Acrylic resin (E) containing hydroxyl group but containing no alkoxysilyl group | Acrylic resin (E-1) | 30 | - | 13 | 13 | 5 | 5 | 5 | 5 | 15 |

(continued)

| | | Comparative Example | | | | | | | | |
|---|---|---|---|---|---|---|---|---|---|---|
| | | 1 | 2 | 3 | 4 | 5 | 6 | 7 | 8 | 9 |
| Polyester resin (B) containing hydroxyl group | Polyester resin (B-1) | 8 | 8 | - | - | - | - | - | - | 10 |
| | Polyester resin (B-2) | - | - | - | - | - | - | - | - | - |
| | Polyester resin (B-3) | - | - | - | - | - | - | - | - | - |
| | Polyester resin (B-4) | - | - | - | - | - | - | - | - | - |
| | Polyester resin (B-5) | - | - | - | - | - | - | - | - | - |
| | Polyester resin (B-6) | - | - | - | - | - | - | - | - | - |
| | Polyester resin (B-7) | - | - | - | - | - | - | - | - | - |
| | Polyester resin (B-8) | - | - | - | - | - | - | - | - | - |
| | Polyester resin (B-9) | - | - | - | - | 8 | - | - | - | - |
| | Polyester resin (B-10) | - | - | - | - | - | 8 | - | - | - |
| | Polyester resin (B-11) | - | - | - | - | - | - | 8 | - | - |
| | Polyester resin (B-12) | - | - | - | - | - | - | - | 8 | - |
| Polyisocyanate compound (C) | "Sumidule N3300" | 37 | 37 | 37 | 37 | 37 | 37 | 37 | 37 | - |
| Melamine resin (D) | "U-VAN 20SE60" | 10 | - | 10 | 10 | 10 | 10 | 10 | 10 | 35 |
| Viscosity modifier | "SETALUX 61767 VX-60" | 0.3 | 0.3 | 0.3 | 0.3 | 0.3 | 0.3 | 0.3 | 0.3 | 0.3 |
| Surface regulator | "BYK-300" | 0.2 | 0.2 | 0.2 | 0.2 | 0.2 | 0.2 | 0.2 | 0.2 | 0.2 |
| Solid content during application (%) | | 58% | 58% | 58% | 45% | 58% | 58% | 58% | 58% | 58% |
| Evaluation results | TUKON hardness | 10 | 13 | 12 | 12 | 11 | 10 | 13 | 12 | 8 |
| | Resistance to abrasion and scratch | D | A | B | B | B | D | A | B | A |
| | Finish appearance | 6 | 13 | 12 | 6 | 11 | 6 | 12 | 12 | 5 |

The results given above show that the coating compositions of the Examples were able to form coating films excellent in terms of hardness, resistance to abrasion and scratch, and finish appearance.

The coating films formed from the coating compositions of Comparative Examples 1 to 3 and 5 to 9 gave results in which at least one of hardness, resistance to abrasion and scratch, and finish appearance did not satisfy the reference value. The coating composition of Comparative Example 4 was able to form a coating film excellent in terms of hardness, resistance to abrasion and scratch, and finish appearance, but the solid content of this coating composition did not satisfy the reference value.

While the present invention has been described in detail using embodiments of the invention and Examples, the invention should not be limited to those embodiments, and various modifications based on the technical ideas of invention can be made.

For example, the configurations, methods, steps, shapes, materials, numerical values, etc. mentioned in the embodiments and Examples described above are mere examples, and different configurations, methods, steps, shapes, materials, numerical values, etc. may be used according to need.

Furthermore, the configurations, methods, steps, shapes, materials, numerical values, etc. in the embodiments described above can be combined with each other so long as the combinations do not depart from the gist of the present invention.

While the invention has been described in detail and with reference to specific embodiments thereof, it will be apparent to one skilled in the art that various changes and modifications can be made therein without departing from the spirit and scope thereof. This application is based on a Japanese patent application filed on August 4, 2020 (Application No. 2020-132067), the contents thereof being incorporated herein by reference.

**Claims**

1. A high-solid-content coating composition comprising:

   (A) an acrylic resin containing a hydroxyl group and an alkoxysilyl group;
   (B) a polyester resin containing a hydroxyl group; and
   (C) a polyisocyanate compound,
   wherein the acrylic resin (A) containing a hydroxyl group and an alkoxysilyl group is contained in an amount of 20 to 50 parts by mass per 100 parts by mass of resinous solid components of the high-solid-content coating composition,
   the polyester resin (B) containing a hydroxyl group has an acid value of 10 mg-KOH/g or less, a hydroxyl value of 180 to 300 mg-KOH/g, and a number-average molecular weight of 400 to 1,500, and
   the coating composition, when being applied, has a solid content of 50 mass% or more.

2. The high-solid-content coating composition according to claim 1, wherein the acrylic resin (A) containing a hydroxyl group and an alkoxysilyl group is contained in an amount of 31 to 45 parts by mass per 100 parts by mass of the resinous solid components of the high-solid-content coating composition.

3. The high-solid-content coating composition according to claim 1 or 2, wherein the acrylic resin (A) containing a hydroxyl group and an alkoxysilyl group has an alkoxysilyl group content of 50 to 200 mmol/g.

4. The high-solid-content coating composition according to any one of claims 1 to 3, wherein the polyester resin (B) containing a hydroxyl group is contained in an amount of 5 to 12 parts by mass per 100 parts by mass of the resinous solid components of the high-solid-content coating composition.

5. The high-solid-content coating composition according to any one of claims 1 to 4, wherein the polyester resin (B) containing a hydroxyl group is a polyester resin obtained using a dihydric alcohol and a tri- or more-hydric alcohol in combination as polyhydric alcohols.

6. The high-solid-content coating composition according to claim 5, wherein the dihydric alcohol and the tri- or more-hydric alcohol are included in a proportion of from 90/10 to 30/70 in terms of (dihydric alcohol)/(tri- or more-hydric alcohol) mass ratio.

7. The high-solid-content coating composition according to any one of claims 1 to 6, which further comprising a melamine resin (D).

8. A method for forming a multilayer coating film, the method comprising:

   step (1): a step in which an intercoating composition is applied to an object to be coated, thereby forming an intercoat;

**EP 4 194 521 A1**

step (2): a step in which a base coating composition is applied to the intercoat formed in the step (1), thereby forming a base coat;

step (3): a step in which the high-solid-content coating composition according to any one of claims 1 to 7 is applied to the base coat formed in the step (2), thereby forming a clear coat; and

step (4): a step in which the intercoat, the base coat, and the clear coat, formed in the steps (1) to (3), are heated and cured at a time.

24

## INTERNATIONAL SEARCH REPORT

| | International application No. |
|---|---|
| | **PCT/JP2021/028925** |

**A. CLASSIFICATION OF SUBJECT MATTER**

*C09D 133/14*(2006.01)i; *B05D 1/36*(2006.01)i; *C09D 167/00*(2006.01)i
FI:    C09D133/14; C09D167/00; B05D1/36 B

According to International Patent Classification (IPC) or to both national classification and IPC

**B. FIELDS SEARCHED**

Minimum documentation searched (classification system followed by classification symbols)

C09D133/14; B05D1/36; C09D167/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2020-007421 A (FUJI XEROX CO., LTD.) 16 January 2020 (2020-01-16) claims, examples | 1-4, 8 |
| A | claims, examples | 5-7 |
| X | JP 2020-012102 A (FUJI XEROX CO., LTD.) 23 January 2020 (2020-01-23) claims, examples | 1-4, 8 |
| A | claims, examples | 5-7 |
| A | JP 02-064120 A (KANEGAFUCHI CHEMICAL INDUSTRY CO., LTD.) 05 March 1990 (1990-03-05) claims, examples | 1-8 |
| A | JP 2000-503047 A (E.I. DU PONT DE NEMOURS AND COMPANY) 14 March 2000 (2000-03-14) claims, examples | 1-8 |
| A | JP 05-339538 A (NIPPON OIL & FATS CO., LTD.) 21 December 1993 (1993-12-21) claims, examples | 1-8 |

[✓] Further documents are listed in the continuation of Box C.  [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 194 521 A1**

## INTERNATIONAL SEARCH REPORT

| | International application No. |
|---|---|
| | **PCT/JP2021/028925** |

**C.    DOCUMENTS CONSIDERED TO BE RELEVANT**

| Category* | Citation of document, with indication, where appropriate, of the relevant passages | Relevant to claim No. |
|---|---|---|
| P, X | JP 2021-098781 A (FUJIFILM BUSINESS INNOVATION CORP.) 01 July 2021 (2021-07-01)<br>      claims, examples | 1, 3, 8 |
| P, A |       claims, examples | 2, 4-7 |
| P, X | JP 2021-098782 A (FUJIFILM BUSINESS INNOVATION CORP.) 01 July 2021 (2021-07-01)<br>      claims, examples | 1, 3, 8 |
| P, A |       claims, examples | 2, 4-7 |

Form PCT/ISA/210 (second sheet) (January 2015)

26

## INTERNATIONAL SEARCH REPORT
### Information on patent family members

| International application No. |
| --- |
| **PCT/JP2021/028925** |

| Patent document cited in search report | | | Publication date (day/month/year) | Patent family member(s) | | | Publication date (day/month/year) |
| --- | --- | --- | --- | --- | --- | --- | --- |
| JP | 2020-007421 | A | 16 January 2020 | CN | 110684449 | A | |
| | | | | US | 2020/0010605 | A1 | |
| | | | | claims, examples | | | |
| | | | | KR | 10-2020-0004731 | A | |
| JP | 2020-012102 | A | 23 January 2020 | CN | 110684168 | A | |
| | | | | US | 2020/0010715 | A1 | |
| | | | | claims, examples | | | |
| | | | | KR | 10-2020-0004733 | A | |
| JP | 02-064120 | A | 05 March 1990 | (Family: none) | | | |
| JP | 2000-503047 | A | 14 March 2000 | AU | 1467697 | A | |
| | | | | US | 5684084 | A | |
| | | | | claims, examples | | | |
| | | | | CA | 2240534 | A1 | |
| | | | | DE | 69616820 | T2 | |
| | | | | EP | 868460 | A1 | |
| | | | | MX | 9804970 | A | |
| | | | | WO | 1997/022647 | A1 | |
| JP | 05-339538 | A | 21 December 1993 | CA | 2080499 | A1 | |
| | | | | EP | 537669 | A1 | |
| | | | | claims, examples | | | |
| | | | | JP | 05-222113 | A | |
| | | | | JP | 06-016780 | A | |
| | | | | JP | 06-032842 | A | |
| | | | | JP | 06-056962 | A | |
| | | | | JP | 05-131130 | A | |
| | | | | JP | 05-311149 | A | |
| | | | | JP | 06-065261 | A | |
| | | | | KR | 930007990 | A | |
| | | | | KR | 960008481 | B1 | |
| | | | | TW | 215102 | B | |
| | | | | US | 5324803 | A | |
| | | | | US | 5414065 | A | |
| JP | 2021-098781 | A | 01 July 2021 | (Family: none) | | | |
| JP | 2021-098782 | A | 01 July 2021 | (Family: none) | | | |

Form PCT/ISA/210 (patent family annex) (January 2015)

**REFERENCES CITED IN THE DESCRIPTION**

**Patent documents cited in the description**

- JP 2002201430 A
- JP 2002020682 A

- JP 2020132067 A

**Non-patent literature cited in the description**

- Polymer Hand Book. vol. III, 139-179